# EUROPEAN PATENT APPLICATION

(11) **EP 4 617 838 A1**
(43) Date of publication of application: **17.09.2025**
(21) Application number: 23896920.8
(22) Date of filing: 01.12.2023
(51) Int. Cl.: G06F 3/0481

(54) **DIAL INTERFACE DRAWING METHOD AND ELECTRONIC DEVICE**

(30) Priority: 01.12.2022 CN 202211537014
(71) Applicant: Huawei Technologies Co., Ltd., Shenzhen, Guangdong 518129 (CN)
(72) Inventor: FENG, Xiang, Shenzhen, Guangdong 518129 (CN); WANG, Haijun, Shenzhen, Guangdong 518129 (CN)
(74) Representative: Pfenning, Meinig & Partner mbB
(86) International application number: PCT/CN2023/135763
(87) International publication number: WO 2024/114778

(57) **Abstract**

Embodiments of this application provide a display interface drawing method and an electronic device, and in particular, relate to the field of terminal technologies. The electronic device includes a central processing unit, a hardware graphics agent, and a graphics processing unit. The method includes: The central processing unit sends an initial drawing command to the hardware graphics agent. Then, the hardware graphics agent generates a first drawing command corresponding to a first frame of display interface based on dynamic data of a display interface corresponding to the initial drawing command in response to the initial drawing command. The hardware graphics agent sends the first drawing command corresponding to the first frame of display interface to the graphics processing unit. The graphics processing unit may execute a drawing task for a foreground image in the first frame of display interface in response to the first drawing command corresponding to the first frame of display interface. The hardware graphics agent is used as an agent of the central processing unit to execute tasks such as processing of the dynamic data and updating of the initial drawing command. This further reduces a running time of the central processing unit and significantly reduces power consumption of the central processing unit.

## Description

This application claims priority to Chinese Patent Application No. 202211537014.8, filed with the China National Intellectual Property Administration on December 1, 2022 and entitled "WATCH-FACE INTERFACE DRAWING METHOD AND ELECTRONIC DEVICE", which is incorporated herein by reference in its entirety.

### TECHNICAL FIELD

This application relates to the field of terminal technologies, and in particular, to a watch-face interface drawing method and an electronic device.

### BACKGROUND

With the rapid development of artificial intelligence technologies, people's pursuit of intelligent, functionally diversified, and humanized lifestyles is becoming increasingly high. As a new type of wearable device, smartwatches are widely used by people. The smartwatch features a low proportion of time in which the smartwatch interacts with a user and a high proportion of time in which a standby watch-face interface is displayed. For example, the user interacts with the smartwatch for a short time. The smartwatch is in a standby state most of the time, and in the standby state, the smartwatch still needs to update display content in the watch-face interface, to ensure that basic information such as time, a battery level, and a step count in the smartwatch is normally displayed. In this way, the smartwatch consumes a large amount of power, and a battery life is further shortened.

Currently, power consumption of the smartwatch is usually reduced by disabling an animation of the watch-face interface, not updating the display content in real time, and reducing a frame rate of drawing the watch-face interface. However, in the foregoing manner, although power consumption of an operating system is indirectly reduced by reducing a quantity of drawing tasks, the user cannot view a complex animation and the basic information in real time, degrading user experience.

### SUMMARY

Embodiments of this application provide a watch-face interface drawing method and an electronic device. An HGAis used as an agent of a CPU to execute tasks such as data processing and updating of a drawing command. This further reduces a running time of the CPU and significantly reduces power consumption of the CPU.

To achieve the foregoing objectives, the following technical solutions are used in embodiments of this application.

According to a first aspect, a watch-face interface drawing method is provided, and is applied to an electronic device. The electronic device includes a central processing unit CPU, a hardware graphics agent HGA, and a graphics processing unit GPU. The method includes: The CPU sends an initial drawing command to the HGA, where the initial drawing command indicates to draw a watch-face interface. Then, the HGA generates a first drawing command corresponding to a first frame of watch-face interface based on dynamic data of the watch-face interface corresponding to the initial drawing command in response to the initial drawing command. The HGA sends the first drawing command corresponding to the first frame of watch-face interface to the GPU, where the first drawing command indicates the GPU to execute a drawing task for the first frame of watch-face interface. The GPU may execute a drawing task for a foreground image in the first frame of watch-face interface in response to the first drawing command corresponding to the first frame of watch-face interface.

It may be learned that in this embodiment of this application, the HGA is introduced between the CPU and the GPU to resolve a problem of high load and high power consumption of the CPU. The CPU only needs to send the initial drawing command to the HGA, to indicate the HGA to draw a watch-face interface. Then, the HGA may act as an agent of the CPU to obtain the dynamic data, update the initial drawing command based on the dynamic data, generate the first drawing command corresponding to the first frame of watch-face interface, and send the first drawing command to the GPU. In this way, the CPU neither needs to continuously and repeatedly obtain and process dynamic data of each frame of watch-face interface, nor needs to frequently interact with the GPU. This further reduces a running time of the CPU and significantly reduces power consumption of the CPU.

In addition, the CPU is a computing core and a control core of the electronic device, and has a very powerful function. The CPU needs to occupy specific resources and consume power when executing a watch-face interface drawing task. However, the HGA is a device with low power consumption in graphics hardware, and occupies fewer resources and consumes less power than the CPU when executing the watch-face interface drawing task. Therefore, the HGA is used as an agent of the CPU to execute a subsequent watch-face interface drawing task. In this way, the power consumption of the CPU can be reduced, and power consumption of a smartwatch in a watch-face interface drawing process can be reduced, to save resources and reduce a use frequency of the CPU.

In an implementation of the first aspect, the electronic device further includes a display subsystem DSS, and the method further includes: The HGA generates a second drawing command corresponding to the first frame of watch-face interface based on the dynamic data of the watch-face interface corresponding to the initial drawing command. Then, the HGA sends the second drawing command corresponding to the first frame of watch-face interface to the DSS. The DSS executes a drawing task for a background image in the first frame of watch-face interface based on the second drawing command corresponding to the first frame of watch-face interface.

It may be learned that the HGA may generate the second drawing command corresponding to the first frame of watch-face interface based on the dynamic data of the watch-face interface corresponding to the initial drawing command, and send the second drawing command to the DSS, so that the DSS executes the drawing task for the background image in the first frame of watch-face interface. The HGA may act as an agent of the CPU to obtain and process dynamic data of each frame of watch-face interface, and interact with the DSS. This further reduces a running time of the CPU and significantly reduces power consumption of the CPU.

In an implementation of the first aspect, a process in which the HGA generates the first drawing command corresponding to the first frame of watch-face interface based on the dynamic data of the watch-face interface corresponding to the initial drawing command includes: The HGA generates the first drawing command corresponding to the first frame of watch-face interface based on the dynamic data and a drawing parameter corresponding to the initial drawing command, where the drawing parameter includes one or more of a drawing area size, drawing coordinates, a drawing gradient color, and a drawing blurring range.

A process in which the HGA generates the first drawing command corresponding to the first frame of watch-face interface based on the dynamic data and the drawing parameter includes: The HGA maps the dynamic data into first drawing information, where the first drawing information indicates to-be-drawn content in the first frame of watch-face interface; and the HGA generates the first drawing command corresponding to the first frame of watch-face interface based on the first drawing information and the drawing parameter.

It may be learned that the HGA may map the dynamic data into the first drawing information; and then generate the first drawing command corresponding to the first frame of watch-face interface based on the first drawing information and the drawing parameter. The first drawing information indicates to-be-drawn content associated with the dynamic data in the first frame of watch-face interface. Therefore, the HGA may act as an agent of the CPU to process the dynamic data and generate the first drawing command, to reduce a workload and the running time of the CPU, so as to reduce the power consumption of the CPU.

In an implementation of the first aspect, the electronic device further includes a display screen, and the method further includes: The GPU sends the drawn foreground image in the first frame of watch-face interface to the DSS based on the first drawing command; the DSS generates the first frame of watch-face interface based on the second drawing command and with reference to the background image in the first frame of watch-face interface and the background image in the first frame of watch-face interface; the DSS sends the first frame of watch-face interface to the display screen; and the display screen displays the first frame of watch-face interface.

It may be learned that the DSS is further configured to: combine, based on the second drawing command, the foreground image that is drawn by the GPU and that corresponds to the first frame and the background image that is drawn by the DSS and that corresponds to the first frame, to generate a complete watch-face interface corresponding to the first frame; and finally send the first watch-face interface to the display screen, so that the display screen subsequently displays the watch-face interface. The DSS generates the first frame of watch-face interface based on the background image in the first frame of watch-face interface and the background image in the first frame of watch-face interface; and may further execute a corresponding sending for display task, so that the display screen displays the complete first frame of watch-face interface. Further, the foregoing steps are continuously repeated to implement a frame cycling process, so as to complete drawing and display operations for all of a preset quantity of frames of watch-face interfaces in a watch-face interface. This reduces a quantity of interactions between the CPU and DSS, and reduces the power consumption of the CPU.

In an implementation of the first aspect, the electronic device further includes a memory; and a process in which the HGA sends the first drawing command corresponding to the first frame of watch-face interface to the GPU includes: The HGA sends a first addressing address corresponding to the first drawing command to the GPU in response to the initial drawing command. In this way, in a process in which the GPU executes the drawing task for the foreground image in the first frame of watch-face interface in response to the first drawing command corresponding to the first frame of watch-face interface, the GPU may access the memory based on the first addressing address, to obtain the first drawing command.

Similarly, a process in which the HGA sends the second drawing command corresponding to the first frame of watch-face interface to the DSS includes: The HGA sends a second addressing address corresponding to the second drawing command to the DSS in response to the initial drawing command. In this way, in a process in which the DSS executes the drawing task for the background image in the first frame of watch-face interface based on the second drawing command corresponding to the first frame of watch-face interface, the DSS may access the memory based on the second addressing address, to obtain the second drawing command.

It may be learned that the HGA may send the first addressing address corresponding to the first drawing command to the GPU, so that the GPU obtains the first drawing command based on the first addressing address; and the HGA may send the second addressing address corresponding to the second drawing command to the DSS, so that the DSS obtains the second drawing command based on the second addressing address. Therefore, after the HGA configures the GPU and the DSS, in a drawing process, the GPU and the DSS may find corresponding drawing instructions and corresponding drawing data based on the first addressing address and the second addressing address to perform drawing. The HGA may not send the drawing commands and the corresponding drawing data to the GPU and the DSS, to reduce a resource waste of the electronic device and improve efficiency of the drawing task.

In an implementation of the first aspect, a process in which the CPU sends the initial drawing command to the HGA includes: The CPU sends a first drawing sequence to the HGA, where the first drawing sequence includes initial drawing commands corresponding to N frames of watch-face interfaces, N is an integer greater than 1, and the N frames of watch-face interfaces include the first frame of watch-face interface.

A process in which the HGA sends the first drawing command corresponding to the first frame of watch-face interface to the GPU includes: The HGA sends a first drawing command corresponding to each of the N frames of watch-face interfaces to the GPU, where the N frames include the first frame.

A process in which the HGA sends the second drawing command corresponding to the first frame of watch-face interface to the DSS includes:

The HGA sends a second drawing command corresponding to each of the N frames of watch-face interfaces to the DSS, where the N frames include the first frame.

It may be learned that in the process in which the CPU sends the initial drawing command to the HGA, the CPU sends the first drawing sequence to the HGA, where the first drawing sequence includes the initial drawing commands corresponding to the N frames of watch-face interfaces. The CPU may prepare an initial drawing command corresponding to a preset quantity of frames, and send the initial drawing command to the HGA, so that the HGA executes drawing tasks corresponding to a plurality of frames of watch-face interfaces. The CPU may prepare drawing commands for the plurality of frames of watch-face interfaces in advance, and send the drawing commands to the HGA in batches. The CPU hands over the tasks for the plurality of frames of watch-face interfaces to the HGA, and does not need to participate in a subsequent watch-face interface drawing task, to reduce the load and the power consumption of the CPU.

In addition, in a process of executing a subsequent task based on the initial drawing command, the HGA may send the first drawing command corresponding to each of the N frames of watch-face interfaces to the GPU, and send the second drawing command corresponding to each of the N frames of watch-face interfaces to the DSS, so that the GPU and the DSS execute a drawing task corresponding to each frame of watch-face interface. The HGA occupies fewer resources and consumes less power than the CPU when acting as an agent of the CPU to execute the watch-face interface drawing task. Therefore, the HGA is used as an agent of the CPU to execute a subsequent watch-face interface drawing task. In this way, the power consumption of the CPU can be reduced, and power consumption of a smartwatch in a watch-face interface drawing process can be reduced, to save resources and reduce a use frequency of the CPU.

In an implementation of the first aspect, the first drawing sequence includes an initial drawing command corresponding to a second frame of watch-face interface, and the method further includes: The DSS executes a drawing task for a background image in the second frame of watch-face interface in a process of executing the drawing task for the foreground image in the first frame of watch-face interface, where the second frame of watch-face interface is a previous frame of watch-face interface that is arranged in a display sequence and that is of the first frame of watch-face interface.

It may be learned that the DSS executes the drawing task for the background image in the second frame of watch-face interface in the process of executing the drawing task for the foreground image in the first frame of watch-face interface. In other words, in a process of executing a drawing task for a background image in a current frame of watch-face interface, a drawing task for a foreground image in a next frame of watch-face interface of the current frame is synchronously executed. Therefore, a short time is consumed in an entire drawing process, and working efficiency of the drawing task is improved.

In an implementation of the first aspect, after completing a drawing task for a watch-face interface corresponding to the first drawing sequence, the HGA receives a second drawing sequence sent by the CPU. It may be learned that after completing the drawing task for the watch-face interface corresponding to the first drawing sequence, the HGA may receive the second drawing sequence sent by the CPU, to execute a new round of watch face drawing task based on the second drawing sequence. The HGA can cyclically act as an agent of the CPU to execute a new round of watch face drawing task, to reduce the load and the power consumption of the CPU.

In an implementation of the first aspect, the method further includes: After the electronic device detects an interrupt operation, the HGA stops sending the first drawing command corresponding to each of the N frames of watch-face interfaces to the GPU, and stops sending the second drawing command corresponding to each of the N frames of watch-face interfaces to the DSS. The HGA receives the second drawing sequence sent by the CPU, where the second drawing sequence includes initial drawing commands corresponding to M frames of watch-face interfaces, and M is an integer greater than 1. The HGA sends a first drawing command corresponding to each of the M frames of watch-face interfaces to the GPU.

It may be learned that after the electronic device detects the interrupt operation, the HGA stops sending the first drawing command and the second drawing command corresponding to each frame in the first drawing sequence, and receives the second drawing sequence sent by the CPU, to execute a new round of watch face drawing task based on the second drawing sequence. The HGA can cyclically act as an agent of the CPU to execute a new round of watch face drawing task, to reduce the load and the power consumption of the CPU.

In an implementation of the first aspect, the CPU enters a sleep state after sending the first drawing sequence to the HGA. Therefore, the CPU only needs to send the first drawing sequence to the HGA, and subsequently may enter the sleep state, and does not need to execute a subsequent watch-face interface drawing task, to reduce the load and the power consumption of the CPU.

According to a second aspect, an electronic device is provided. The electronic device includes a memory and one or more processors. The memory is coupled to the processor. The memory stores computer program code, and the computer program code includes computer instructions. When the computer instructions are executed by the processor, the electronic device is enabled to perform the watch-face interface drawing method according to the first aspect.

According to a third aspect, a computer-readable storage medium is provided. The computer-readable storage medium stores instructions, and when the instructions are run on a computer, the computer is enabled to perform the watch-face interface drawing method according to the first aspect.

### BRIEF DESCRIPTION OF DRAWINGS

FIG. 1 is a diagram of a structure of a smartwatch according to an embodiment of this application;
FIG. 2 is a diagram of a hardware structure of a smartwatch according to an embodiment of this application;
FIG. 3 is a diagram of a hardware structure of a smartwatch according to an embodiment of this application;
FIG. 4 is a diagram of a software structure of a smartwatch according to an embodiment of this application;
FIG. 5 is a diagram of phases of a watch-face interface drawing method according to an embodiment of this application;
FIG. 6 is a schematic flowchart of a watch-face interface drawing method according to an embodiment of this application;
FIG. 7 is a schematic flowchart of a method for drawing a first frame of watch-face interface according to an embodiment of this application;
FIG. 8 is a diagram of processing dynamic data for a first frame of watch-face interface according to an embodiment of this application;
FIG. 9 is a diagram in which a smartwatch does not display a watch-face interface and detects an interrupt operation according to an embodiment of this application;
FIG. 10 is a diagram in which a smartwatch displays a watch-face interface and detects an interrupt operation according to an embodiment of this application;
FIG. 11 is a diagram of an interrupt operation triggered by a smartwatch according to an embodiment of this application; and
FIG. 12 is a diagram of a structure of a wearable device according to an embodiment of this application.

### DESCRIPTION OF EMBODIMENTS

The following describes the technical solutions in embodiments of this application with reference to the accompanying drawings in embodiments of this application. In the descriptions of this application, unless otherwise specified, "/" means an "or" relationship between associated objects. For example, A/B may mean A or B. In this application, "and/or" is merely an association relationship for describing associated objects, and represents that three relationships may exist. For example, A and/or B may represent the following three cases: Only A exists, both A and B exist, and only B exists, where A and B may be in a singular form or a plural form. In addition, in the descriptions of this application, unless otherwise specified, "a plurality of" means two or more. At least one of the following items (pieces) or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions and roles. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may learn that with the evolution of the network architecture and the emergence of new service scenarios, the technical solutions provided in embodiments of this application are also applicable to similar technical problems.

With the rapid development of artificial intelligence technologies, people's pursuit of intelligent, functionally diversified, and humanized lifestyles is becoming increasingly high. Wearable devices in electronic devices are widely used by people. Many users may wear the wearable devices every day, and wear the wearable devices for a long time. These wearable devices are small and convenient. The user may wear the wearable device to view or listen to a notification message, a reminder message, and the like, may further listen to music, listen to a book, and the like, and may further control some smart voice assistants and the like.

In embodiments of this application, the wearable device may include an electronic device having a display, for example, a smartwatch, a smart bracelet, or a smart band. The following uses the smartwatch as an example. Usually, a watch face of the smartwatch is electronically displayed, and a user may interact with the smartwatch through a watch-face interface displayed on the watch face. The smartwatch features a low proportion of time in which the smartwatch interacts with the user and a high proportion of time in which a standby watch-face interface is displayed. For example, the user does not continuously interact with the smartwatch for a long time. Therefore, an interaction time between the user and the smartwatch is less than a standby time of the smartwatch. In a standby state, the smartwatch still needs to update display content in the watch-face interface, to ensure that basic information such as time, a battery level, and a step count in the smartwatch is normally displayed. However, in a process of updating the display content in real time, the smartwatch consumes a large amount of power, and a battery life is further shortened.

Usually, power consumption and load of a processor in the smartwatch during drawing of the watch-face interface can be reduced by disabling an animation of the watch-face interface, not updating the display content in real time, lowering watch face brightness, and reducing a frame rate of drawing the watch-face interface. Alternatively, a device with low power consumption may be used to replace a device with high power consumption to undertake a drawing task. For example, a microcontroller (microcontroller unit, MCU) and a two-dimensional graphics processing unit (graphics processing unit, GPU) with low power consumption are used to replace a core central processing unit (Central Processing Unit, CPU) and a three-dimensional GPU with high power consumption to undertake the drawing task.

However, in the foregoing manner, although power consumption of an operating system is indirectly reduced by reducing a quantity of drawing tasks, the user cannot view a complex animation and the basic information in real time, and a high display frame rate cannot be implemented. Consequently, the user cannot smoothly view the watch-face interface, degrading user experience.

Based on the foregoing content, embodiments of this application provide a watch-face interface drawing method, applied to a wearable device. The wearable device includes a central processing unit (Central Processing Unit, CPU), a graphics processing unit (Graphics Processing Unit, GPU), a display subsystem (Display Subsystem, DSS), and a hardware graphics agent (Hardware Graphics Agent, HGA).

In embodiments of this application, in a process of drawing a watch-face interface, a smartwatch does not need to disable an animation of the watch-face interface, lower watch face brightness, or reduce a frame rate of drawing the watch-face interface. Instead, the HGA is introduced between the CPU and the GPU/DSS in the smartwatch to resolve a problem of high load and high power consumption of the CPU. A specific implementation is as follows: The CPU sends a first drawing sequence to the HGA, where the first drawing sequence includes initial drawing commands corresponding to N frames of watch-face interfaces, N is an integer greater than 1, and the N frames of watch-face interfaces include a first frame of watch-face interface. In this way, the CPU may send the initial drawing command to the HGA, where the initial drawing command indicates to draw a watch-face interface. Then, the HGA generates a first drawing command corresponding to the first frame of watch-face interface based on dynamic data of the watch-face interface corresponding to the initial drawing command in response to the initial drawing command; and the HGA sends the first drawing command corresponding to the first frame of watch-face interface to the GPU, where the first drawing command indicates the GPU to execute a drawing task for the first frame of watch-face interface. Then, the GPU may execute a drawing task for a foreground image in the first frame of watch-face interface in response to the first drawing command corresponding to the first frame of watch-face interface.

It may be learned that the CPU may send an initial drawing command for a preset quantity of frames and a parameter corresponding to the initial drawing command to the HGA, so that the HGA acts as an agent of the CPU to execute a subsequent watch-face interface drawing task. Therefore, the CPU does not need to continuously and repeatedly obtain and process dynamic data of each frame of watch-face interface, generate a drawing command corresponding to each frame, and send the drawing command to the GPU and the DSS, and therefore does not need to frequently interact with the GPU and DSS. This further reduces a running time of the CPU and significantly reduces power consumption of the CPU while ensuring that a user can view an updated complex animation and basic information in real time.

In addition, the CPU is a computing core and a control core of the electronic device, and has a very powerful function. The CPU needs to occupy specific resources and consume power when executing a watch-face interface drawing task. However, the HGA is a device with low power consumption in graphics hardware, and occupies fewer resources and consumes less power than the CPU when executing the watch-face interface drawing task. Therefore, the HGA is used as an agent of the CPU to execute a subsequent watch-face interface drawing task. In this way, the power consumption of the CPU can be reduced, and power consumption of the smartwatch in a watch-face interface drawing process can be reduced, to save resources and reduce a use frequency of the CPU.

The following uses an example in which a first device is a smartwatch 100 in a wearable device for description.

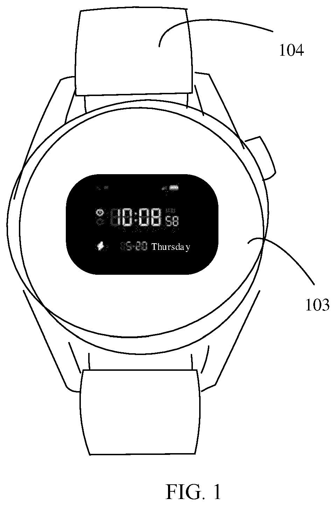

For example, FIG. 1 is a diagram of a structure of a smartwatch 100. The smartwatch 100 may be worn on a wrist of a user. The smartwatch 100 may include a display screen 103 and a fastening band 104. The display screen 103 is configured to display time and user touches/taps to display other related content. The fastening band 104 is configured to fasten the smartwatch 100 to the wrist of the user.

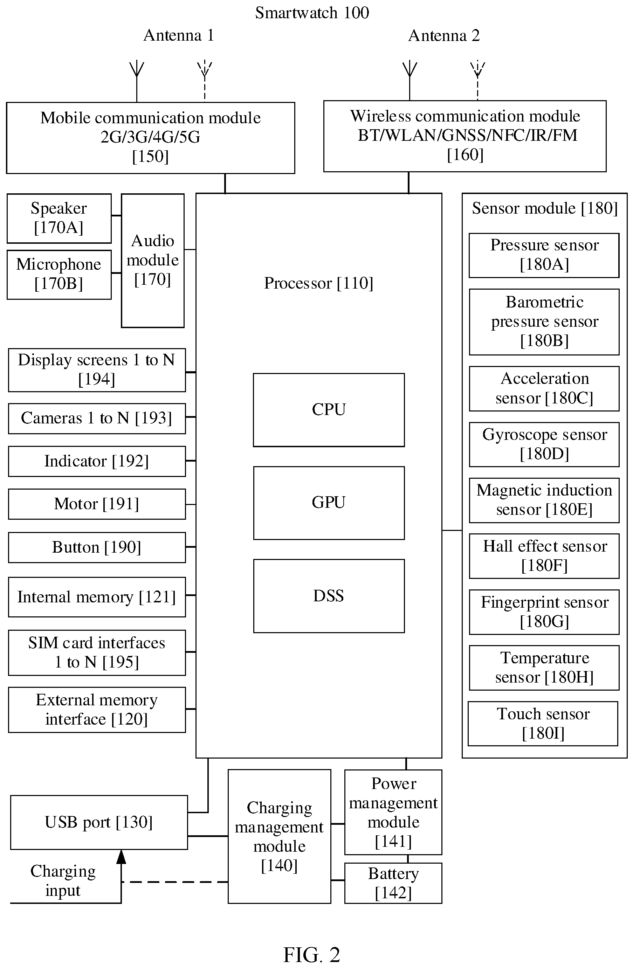

For example, FIG. 2 is a diagram of a hardware structure of a smartwatch 100 according to an embodiment of this application. With reference to FIG. 2, the smartwatch 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a microphone 170B, a sensor module 180, a button 190, a motor 191, an indicator 192, a camera 193, a display screen 194, a subscriber identity module (subscriber identity module, SIM) card interface 195, a positioning module 196, and the like. The sensor module 180 may include a pressure sensor 180A, a barometric pressure sensor 180B, an acceleration sensor 180C, a gyroscope sensor 180D, a magnetic induction sensor 180E, a Hall effect sensor 180F, a fingerprint sensor 180G, a temperature sensor 180H, a touch sensor 180I, and the like.

It may be understood that the structure shown in this embodiment of the present invention does not constitute a specific limitation on the smartwatch 100. In some other embodiments of this application, the smartwatch 100 may include more or fewer components than those shown in the figure, some components may be combined, some components may be split, or there may be different component arrangements. The components shown in the figure may be implemented by hardware, software, or a combination of software and hardware.

The processor 110 may include one or more processing units. For example, the processor 110 may include a central processing unit (Central Processing Unit, CPU), an application processor (application processor, AP), a modem processor, a graphics processing unit (graphics processing unit, GPU), a display subsystem (Display Subsystem, DSS), a hardware graphics agent (Hardware Graphics Agent, HGA), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction reading and instruction execution.

A memory may further be disposed in the processor 110, to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that an interface connection relationship between the modules shown in this embodiment of this application is merely an example for description, and does not constitute a limitation on the structure of the smartwatch 100. In some other embodiments of this application, the smartwatch 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the smartwatch 100. The charging management module 140 may further supply power to an electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the smartwatch 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the smartwatch 100 may be configured to cover a single or a plurality of communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the smartwatch 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The wireless communication module 160 may provide a wireless communication solution that is applied to the smartwatch 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices into which at least one communication processing module is integrated. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the smartwatch 100, the antenna 1 and the mobile communication module 150 are coupled, and the antenna 2 and the wireless communication module 160 are coupled, so that the smartwatch 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The smartwatch 100 implements a display function through the CPU, the GPU, the HGA, the DSS, the display screen 194, the application processor, and the like. The CPU is configured to control the HGA to perform image processing, and connects to the HGA, the GPU, the DSS, the display screen 194, and the application processor. In some embodiments, the CPU may send a drawing sequence to the HGA, where the drawing sequence includes an initial drawing command and a corresponding drawing parameter, so that the HGA executes a subsequent watch-face interface drawing task based on the drawing sequence.

The HGA is used as an agent of the CPU to execute a graphics drawing task, and configure and schedule the GPU and the DSS. In some embodiments, the HGA sends a first drawing command to the GPU, so that the GPU performs a drawing operation for a foreground image in a watch-face interface. The HGA may further send a second drawing command to the DSS, so that the DSS performs a display operation for a background image in the watch-face interface.

The GPU is configured to: perform mathematical and geometric computation, and render an image. In some embodiments, the GPU receives the first drawing command sent by the HGA, performs the drawing operation for the foreground image in the watch-face interface, and sends the drawn foreground image to the DSS. The processor 110 may include one or more GPUs that execute program instructions to generate or change display information.

The DSS is configured to: extract pixel data of an image, perform color conversion, combination, and another pixel operation on the pixel data, and finally send processed pixel data to the display screen 194. In some embodiments, the DSS may extract the background image in the watch-face interface from the internal memory 121, and then generate a complete watch-face interface with reference to the background image and the foreground image sent by the GPU, and send the watch-face interface to the display screen 194.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini LED, a micro LED, a micro OLED, a quantum dot light-emitting diode (quantum dot light-emitting diode, QLED), or the like. In some embodiments, the smartwatch 100 may include one or N display screens 194, where N is a positive integer greater than 1.

The smartwatch 100 may implement a photographing function through the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature in a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the smartwatch 100 may include one or N cameras 193, where N is a positive integer greater than 1.

The digital signal processor is configured to process a digital signal, and may process another digital signal in addition to the digital image signal. For example, when the smartwatch 100 selects a frequency, the digital signal processor is configured to perform Fourier transform on energy of the frequency.

The video codec is configured to compress or decompress a digital video. The smartwatch 100 may support one or more video codecs. In this way, the smartwatch 100 may play or record videos in a plurality of coding formats, for example, moving picture experts group (moving picture experts group, MPEG)-1, MPEG-2, MPEG-3, and MPEG-4.

The external memory interface 120 may be configured to connect to an external memory card, for example, a micro SD card, to extend a storage capability of the smartwatch 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and an address book) and the like created during use of the smartwatch 100. In addition, the internal memory 121 may include a high-speed random access memory, and may further include a nonvolatile memory, for example, at least one magnetic disk storage device, a flash memory, and a universal flash storage (universal flash storage, UFS). The processor 110 runs the instructions stored in the internal memory 121 and/or the instructions stored in the memory disposed in the processor, to perform various functional applications and data processing of the smartwatch 100.

The smartwatch 100 may implement an audio function, for example, music playing and recording, through the audio module 170, the speaker 170A, the microphone 170B, the application processor, and the like.

Optionally, the sensor module 180 may further include a pressure sensor, a barometric pressure sensor, an acceleration sensor, a gyroscope sensor, a Hall effect sensor, a fingerprint sensor, a temperature sensor, a touch sensor, and the like.

The button 190 includes a power button, a volume button, and the like. The button 190 may be a mechanical button, or may be a touch button. The smartwatch 100 may receive a button input, and generate a button signal input related to user setting and function control of the smartwatch 100.

The motor 191 may generate a vibration prompt. The motor 191 may be configured to provide a vibration prompt for an incoming call, and may be further configured to provide vibration feedback for a touch. For example, touch operations performed on different applications (for example, photographing and audio playing) may correspond to different vibration feedback effects. The motor 191 may correspond to different vibration feedback effects for touch operations performed on different areas of the display screen 194. Different application scenarios (for example, a time reminder, information receiving, an alarm clock, and a game) may correspond to different vibration feedback effects. A touch vibration feedback effect may be further customized.

The indicator 192 may be an indicator, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to come into contact with or be separated from the smartwatch 100. The smartwatch 100 may support one or N SIM card interfaces, where N is a positive integer greater than 1.

The positioning module 196 may be configured to position the smartwatch 100. For example, the positioning module 196 may be a GPS module, a BeiDou module, or the like. The positioning module 196 is not specifically limited in this application. In some embodiments, the positioning module 196 is configured to determine strength of a positioning signal. The strength of the positioning signal may indicate a scenario in which the smartwatch 100 is located. For example, the smartwatch is indoors without natural light, indoors near a window, outdoors, or outdoors with light blocked.

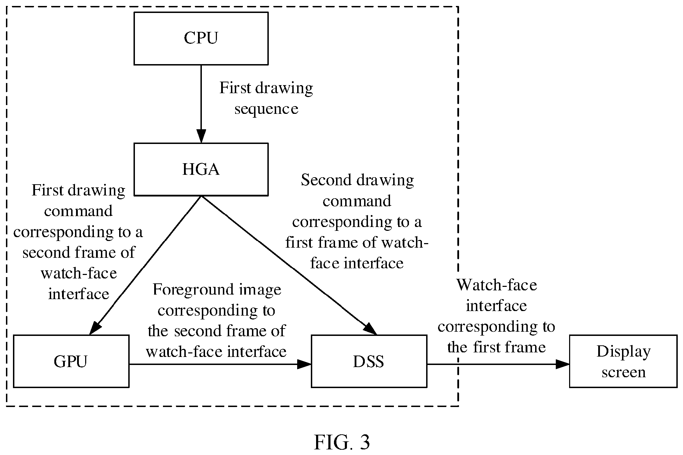

The watch-face interface drawing method provided in embodiments of this application may be applied to a smartwatch. With reference to FIG. 3, the following still uses the smartwatch as an example to describe a working procedure of the CPU, the GPU, the DSS, and the HGA.

The CPU is a core component in the smartwatch, and is configured to execute program code in the smartwatch. The HGAis configured to: obtain and process dynamic data, and configure and schedule the GPU and the DSS based on a drawing time sequence. The dynamic data is data that frequently changes in real time in a watch-face interface, for example, time data, weather data, and sports and health data. The GPU is configured to execute a corresponding drawing task based on a drawing sequence sent by the HGA, for example, a foreground image in the watch-face interface. The DSS is configured to: combine the foreground image drawn by the GPU and a background image generated by the DSS, to generate a watch-face interface, and send the generated watch-face interface to the display screen, so that the display screen subsequently displays the watch-face interface.

In this embodiment of this application, the CPU is configured to: prepare drawing sequence information, and send a first drawing sequence to the HGA, where the first drawing sequence includes an initial drawing command for a preset quantity of frames, and the first drawing sequence indicates the HGA to execute a subsequent watch-face interface drawing task based on the initial drawing command. Then, the HGA obtains dynamic data corresponding to the initial drawing command in response to the initial drawing sequence. The HGA generates a first drawing command corresponding to a first frame of watch-face interface and a second drawing command corresponding to a second frame of watch-face interface based on the dynamic data. The HGA sends the first drawing command corresponding to the first frame of watch-face interface to the GPU. The HGA sends the second drawing command corresponding to the second frame of watch-face interface to the DSS. The second frame is a previous frame of the first frame. Then, the GPU executes a drawing task for a first frame of foreground image based on the first drawing command, and the DSS executes a drawing task for a second frame of background image based on the second drawing command.

It may be understood that when the DSS draws a background image in a previous frame of watch-face interface, the GPU draws a foreground image in a current frame of watch-face interface. When drawing the current frame of watch-face interface, the DSS obtains the foreground image that is in the current frame of watch-face interface and that is drawn by the GPU. The DSS directly sends, with reference to the foreground image in the current frame of watch-face interface and a background image that is in the current frame of watch-face interface and that is generated by the DSS, the current frame of watch-face interface to the display screen of the smartwatch for display. When the DSS draws the current frame of watch-face interface, the GPU draws a foreground image in a next frame of watch-face interface.

A software system of the smartwatch 100 may use a layered architecture, an event-driven architecture, a microkernel architecture, a micro service architecture, or a cloud architecture. In this embodiment of the present invention, an Android system with a layered architecture is used as an example to describe a software structure of the smartwatch 100.

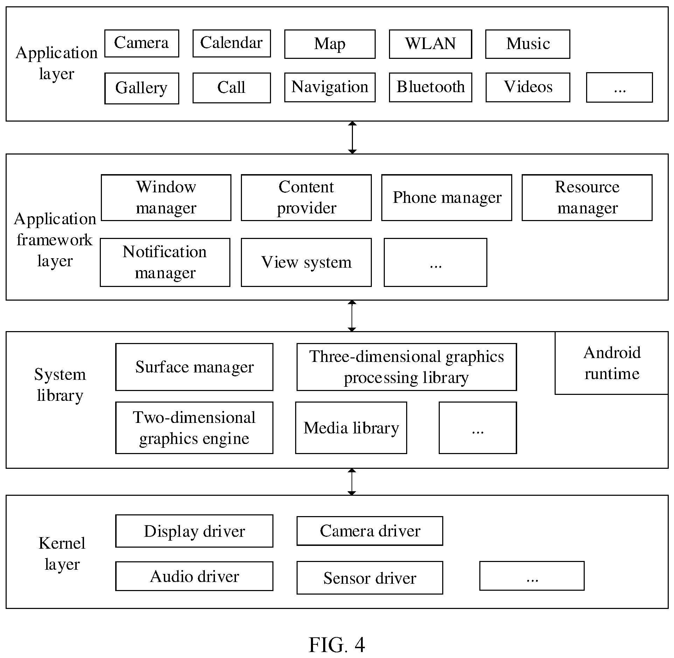

FIG. 4 is a block diagram of a software structure of a smartwatch 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer.

The application layer may include a series of application packages.

As shown in FIG. 4, the application packages may include applications such as Camera, Gallery, Calendar, Call, Map, Navigation, WLAN, Bluetooth, Weather, and Videos.

The application framework layer provides an application programming interface (application programming interface, API) and a programming framework for the applications at the application layer. The application framework layer includes some predefined functions.

As shown in FIG. 4, the application framework layer may include a window manager, a content provider, a view system, a phone manager, a resource manager, a notification manager, a location manager, and the like.

The window manager is configured to manage a window program. The window manager may obtain a size of a display screen, determine whether there is a status bar, lock the screen, take a screenshot, and the like.

The content provider is configured to: store and obtain data, and enable the data to be accessed by an application. The data may include a video, an image, audio, calls that are made and answered, a browsing history, a bookmark, an address book, and the like.

The view system includes visual controls such as a control for displaying text and a control for displaying a picture. The view system may be configured to construct an application. A display interface may include one or more views. For example, a display interface including a short message service notification icon may include a view for displaying text and a view for displaying a picture.

The phone manager is configured to provide a communication function of the smartwatch 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message that may automatically disappear after a short pause and require no user interaction. For example, the notification manager is configured to: notify download completion, provide a message notification, and the like. The notification manager may alternatively be a notification that appears in a top status bar of the system in a form of a graph or scroll bar text, for example, a notification of an application running in background or a notification that appears on the screen in a form of a dialog window. For example, text information is prompted in the status bar, an alert tone is made, the electronic device vibrates, or an indicator blinks.

The location manager is configured to provide a location service to the smartwatch 100. A system service of the location manager is a core component of a location service, and provides a series of methods to process location-related problems, including querying a previous known location, registering and deregistering a periodic location update from a component (location provider) that provides a location function, and registering and deregistering a trigger for a defined intent (intent) when approaching coordinates.

The Android runtime includes a kernel library and a virtual machine. The Android runtime is responsible for scheduling and management of the Android system.

The kernel library includes two parts: a function that needs to be called in a Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, combination, layer processing, and the like. In some embodiments, the GPU may invoke the three-dimensional graphics processing library to execute a drawing task for a foreground image in a watch-face interface. In some other embodiments, the DSS may invoke the three-dimensional graphics processing library to execute a combination task for the foreground image and a background image in the watch-face interface.

The 2D graphics engine is a drawing engine for 2D drawing. In some embodiments, when the foreground image and the background image in the watch-face interface are two-dimensional images, the GPU may invoke the 2D graphics engine to execute the drawing task for the foreground image in the watch-face interface, and the DSS may invoke the 2D graphics engine to execute the combination task for the foreground image and the background image in the watch-face interface.

The kernel layer is a layer between hardware and software. The kernel layer includes at least a display driver, a camera driver, an audio driver, and a sensor driver.

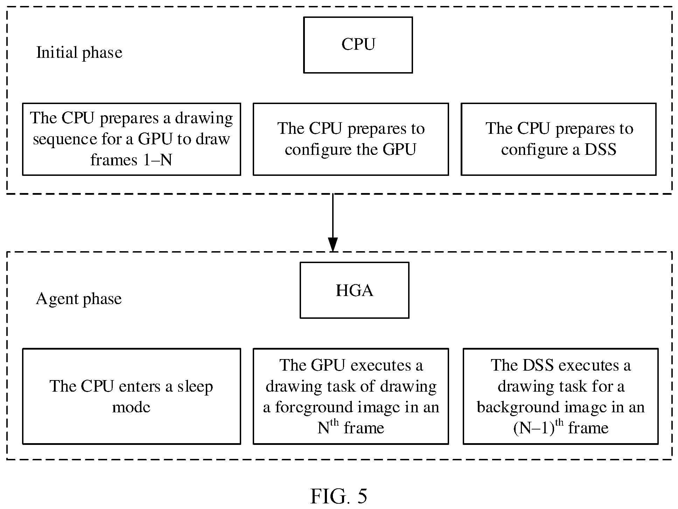

For ease of clearly describing the watch-face interface drawing method provided in embodiments of this application, refer to FIG. 5. Embodiments of this application are mainly applied to a watch face drawing scenario. An entire system architecture may include an initial phase and an agent phase. First, the initial phase may include a CPU preparing a drawing sequence for a GPU to draw frames 1-N and preparing to configure the GPU and a DSS (for example, state configuration). Then, a task of the CPU in the initial phase is sent to an HGA. In this case, in the agent phase, the CPU may enter a sleep mode, for example, run in a low power consumption mode. The HGA controls the GPU to execute a drawing task for a foreground image in an N^{th} frame, and controls the DSS to execute a drawing task for a background image in an (N-1)^{th} frame.

In conclusion, in this embodiment of this application, the HGA acts as an agent of the CPU to execute a watch-face interface drawing task, and the CPU end does not need to continuously and repeatedly obtain and process dynamic data. This further reduces a running time of the CPU and improves working efficiency of drawing and subsequently displaying the watch-face interface.

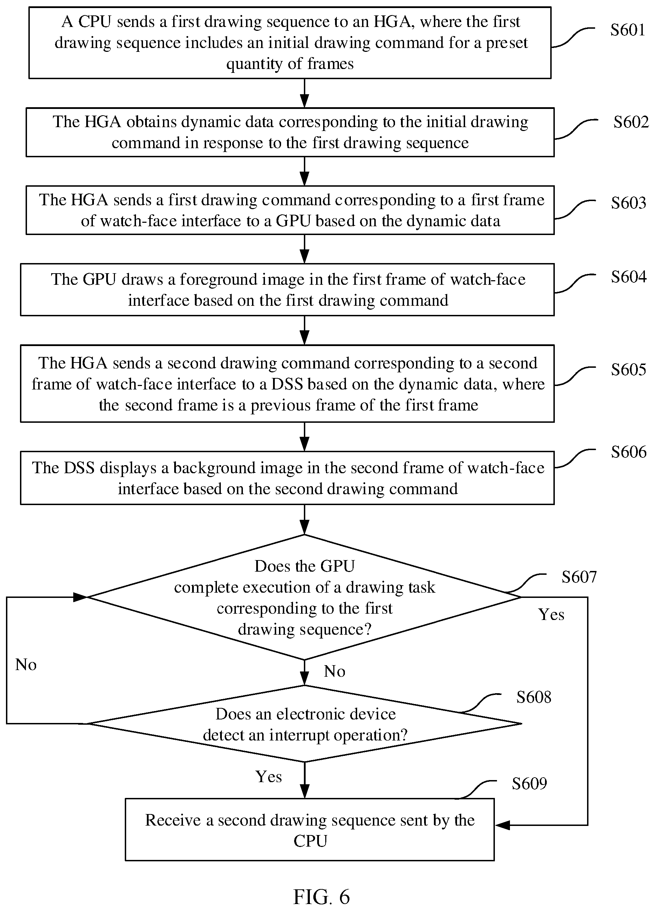

FIG. 6 is a schematic flowchart of a watch-face interface drawing method according to an embodiment of this application. With reference to FIG. 4, the following describes, by using an example in which a smartwatch includes a CPU, a GPU, a DSS, and an HGA, in detail the watch-face interface drawing method provided in this embodiment of this application. As shown in FIG. 6, the method may include the following steps S601-S606.

Step S601: The CPU sends a first drawing sequence to the HGA, where the first drawing sequence includes an initial drawing command corresponding to a preset quantity of frames.

The first drawing sequence may include initial drawing commands corresponding to N frames of watch-face interfaces. For example, the first drawing sequence includes an initial drawing command corresponding to a first frame of watch-face interface, and may further include an initial drawing command corresponding to another frame of watch-face interface different from the first frame. It may be understood that the first frame of watch-face interface may correspond to one initial drawing command, or may correspond to a plurality of initial drawing commands. A quantity of initial drawing commands corresponding to each frame of watch-face interface is not specifically limited in this embodiment of this application.

In some embodiments, hardware in the smartwatch may draw an interface based on the first drawing sequence. The first drawing sequence may include an initial drawing command and a drawing parameter corresponding to the initial drawing command. The first drawing sequence represents the initial drawing command arranged in a preset sequence and corresponding drawing information in a drawing process. It may be understood that the preset sequence indicates an execution sequence of the initial drawing command. Execution means a sequence of code in which the initial drawing command is located during drawing of an image frame. The sequence indicates a time sequence in which the HGA subsequently processes the initial drawing command.

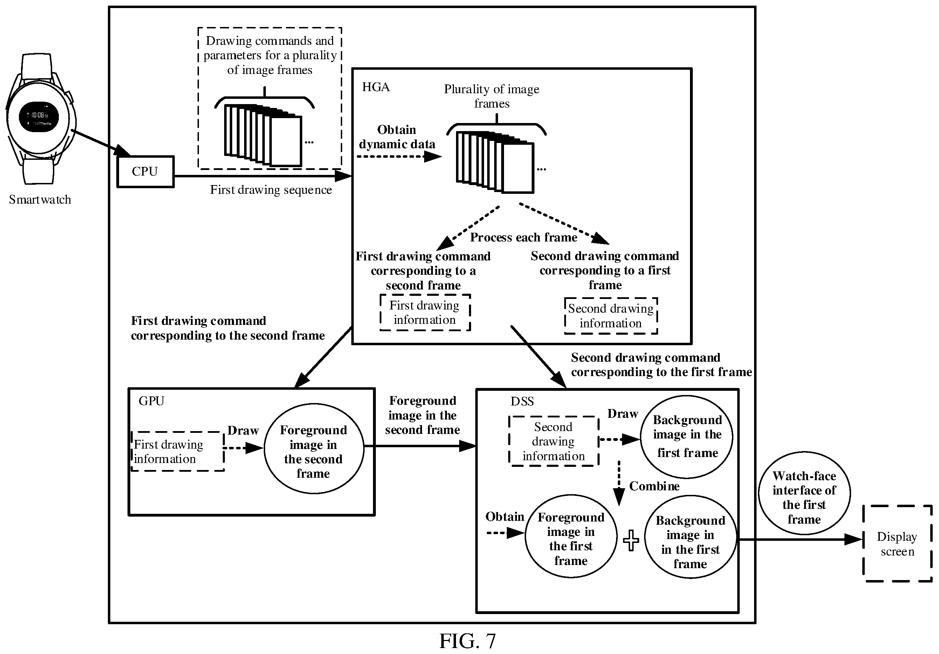

In this embodiment of this application, with reference to FIG. 7, the first drawing sequence includes an initial drawing command for a preset quantity of frames and a drawing parameter corresponding to the initial drawing command. For example, the preset quantity of frames may be 60 frames. In this way, the CPU may generate a set of 60 frames of initial drawing commands and corresponding drawing parameters, and send the set to the HGA, so that the HGA calculates, based on the set, data required for drawing a watch-face interface, generates a series of commands corresponding to the data, and sends the series of commands to the GPU and the DSS.

It should be noted that a frame is a single image picture in a smallest unit in an image animation. One frame is a static image, and consecutive frames form an animation, for example, a dynamic image. Usually, a quantity of frames is a quantity of image frames transmitted in 1 second, or may be understood as a quantity of times the GPU can refresh per second. Each frame is a static image, and a moving dynamic image is formed by quickly and continuously displaying a plurality of frames.

The initial drawing command indicates the HGA to execute a corresponding drawing task. For example, the initial drawing command may include but is not limited to one or more of a linear gradient, a picture gradient, picture blurring, and the like. The drawing parameter corresponding to the initial drawing command may include but is not limited to one or more of an area size, coordinates, a gradient color, a blurring range, and the like. For another example, the initial drawing command may further include drawing a square, a circle, a straight line, or a curve, and the drawing parameter corresponding to the initial drawing command may include start coordinates for drawing, end coordinates for drawing, a line type, a line thickness, a line color, and the like. The initial drawing command may further include a preset drawing model (for example, Winnie the Pooh standing frontally), and the drawing parameter corresponding to the initial drawing command may include an overall rotation angle, a brightness parameter, a material parameter, and the like of the drawing model.

It may be understood that the first drawing sequence in this embodiment of this application may further include any initial drawing command used in any computer system, and a corresponding drawing parameter may be flexibly determined based on an actual parameter requirement. This is not limited in this embodiment of this application.

In this embodiment of this application, the CPU enters a sleep state after sending the first drawing sequence to the HGA.

It may be learned that the CPU directly sends the first drawing sequence to the HGA, where the first drawing sequence includes the initial drawing command for the preset quantity of frames and the drawing parameter corresponding to the initial drawing command, so that the HGA acts as an agent of the CPU to execute tasks such as data processing and updating of the initial drawing command. In this way, the CPU does not need to continuously and repeatedly process data corresponding to each frame of watch-face interface, and update an initial drawing command corresponding to each frame of watch-face interface and a corresponding drawing parameter, but directly sends the first drawing sequence to the HGA and enters the sleep state. This further reduces a running time of the CPU and significantly reduces power consumption of the CPU.

In this embodiment of this application, after receiving the first drawing sequence sent by the CPU, the HGA may replace the CPU to calculate data required for drawing a watch-face interface, generate a series of commands corresponding to the data, and send the series of commands to the GPU and the DSS, and may replace the CPU to configure and schedule the GPU and DSS. For details, refer to the following steps.

Step S602: The HGA obtains dynamic data corresponding to the initial drawing command in response to the first drawing sequence.

In some embodiments of this application, still with reference to FIG. 7, the HGA may obtain the dynamic data corresponding to the initial drawing command in response to receiving the first drawing sequence. In some cases, the HGA may obtain the dynamic data corresponding to the initial drawing command in a sequence of the preset quantity of frames. For example, the HGA obtains dynamic data corresponding to the initial drawing command for the first frame of watch-face interface, and then obtains dynamic data corresponding to an initial drawing command for a second frame of watch-face interface. In some other cases, the HGA may directly obtain dynamic data corresponding to all initial drawing commands for the preset quantity of frames of watch-face interfaces.

The dynamic data is data that frequently changes in real time in a watch-face interface. The dynamic data may include sports and health data, time data, weather data, calendar data, and the like.

In some embodiments, the HGA may obtain corresponding dynamic data based on display content in a preset watch-face interface. The display content corresponding to the watch-face interface may be preset by a user, or may be automatically set by a system.

For example, the user may set some customized watch-face interfaces, for example, a cover interface of the smartwatch and a watch-face interface corresponding to a customized mode. For example, the user may set display content in the cover interface. When the user sets that the display content in the cover interface includes sports and health content, time content, and weather content, the dynamic data that corresponds to the initial drawing command and that is obtained by the HGA includes sports and health data, time data, and weather data.

The system may also preset watch-face interfaces corresponding to some modes, for example, a watch-face interface corresponding to a sports mode, a watch-face interface corresponding to a simplified mode, and a watch-face interface corresponding to a night mode. For example, when the user selects a watch-face interface corresponding to a mode in the system, display content in the watch-face interface is automatically set by the system. When the user selects the watch-face interface corresponding to the sports mode in the system, if display content in the watch-face interface includes sports and health content and time content, the dynamic data that corresponds to the initial drawing command and that is obtained by the HGA includes sports and health data and time data.

In some other embodiments, in a process of drawing a watch-face interface by the smartwatch, a watch face drawing task is interrupted (for example, in a process of displaying the watch-face interface by the smartwatch, a user enters a switch operation on the watch-face interface). After the smartwatch detects the interrupt operation, the HGA may obtain corresponding dynamic data based on display content in a preset watch-face interface. The display content corresponding to the watch-face interface is automatically set by a system.

For example, an audio application icon is displayed in a home screen interface of the smartwatch, and the user may tap the audio application icon to trigger entry into a details page corresponding to an audio application. The smartwatch may trigger drawing and display of the details page of the audio application in response to the tap operation of the user. It may be understood that the details page of the audio application may include display content such as a search bar, audio information, and a function entry. The display content in the details page is preconfigured by the system and cannot be preset by the user. Therefore, in a process in which the smartwatch draws the details page of the audio application, the HGA may obtain corresponding dynamic data based on the display content in the preset details page.

In an implementation, the HGA may monitor the dynamic data. In an example of the sports and health data, the sports and health data may include one or a combination of a step count, a heart rate, consumed calories, exercise duration, and a quantity of exercise times. The HGA may monitor the sports and health data. For example, the step count may be monitored, the heart rate may be monitored, the consumed calories may be monitored, the exercise duration may be monitored, and the quantity of exercise times may be monitored. This is not limited in this embodiment of this application.

In an implementation, a manner in which the HGA monitors the dynamic data may include: monitoring the dynamic data in real time, monitoring the dynamic data at a preset time interval, monitoring the dynamic data at a preset time point, monitoring the dynamic data based on another preset rule, or the like. This is not limited in this embodiment of this application.

In some embodiments of this application, in a process of obtaining the dynamic data corresponding to the drawing command, the HGA may obtain a data value of the dynamic data corresponding to the preset quantity of frames.

For example, when the dynamic data is sports and health data, a data value corresponding to the sports and health data may be obtained; when the dynamic data is time data, a time value corresponding to the time data may be obtained; when the dynamic data is weather data, a weather value corresponding to the weather data may be obtained; or when the dynamic data is calendar data, a date value corresponding to the calendar data may be obtained.

For example, the dynamic data is sports and health data. In this case, the data value of the sports and health data may include a step count value corresponding to the step count, a heart rate value corresponding to the heart rate, a calorie value corresponding to the consumed calories, a duration value corresponding to the exercise duration, a quantity of times value corresponding to the quantity of exercise times, and the like.

For example, the dynamic data is time data. In this case, the time value of the time data may include a time value corresponding to "hour", a time value corresponding to "minute", a time value corresponding to "second", and the like.

For example, the dynamic data is weather data. In this case, the weather value of the weather data may include a temperature value corresponding to a temperature, a humidity value corresponding to humidity, an altitude value corresponding to an altitude, and the like.

For example, the dynamic data includes calendar data. In this case, the date value of the calendar data may include a date value corresponding to "year", a date value corresponding to "month", a date value corresponding to "day", a schedule value corresponding to a schedule, and the like.

In this embodiment of this application, after obtaining the dynamic data corresponding to the initial drawing command, the HGA needs to calculate data required for drawing a watch-face interface and generate a series of commands corresponding to the data. For details, refer to the following steps.

Step S603: The HGA sends a first drawing command corresponding to the first frame of watch-face interface to the GPU based on the dynamic data.

In this embodiment of this application, the HGA generates the first drawing command corresponding to the first frame of watch-face interface based on dynamic data of a watch-face interface corresponding to the initial drawing command. Then, the HGA sends the first drawing command corresponding to the first frame of watch-face interface to the GPU, where the first drawing command indicates the GPU to execute a drawing task for a foreground image in the first frame of watch-face interface.

In some embodiments, still with reference to FIG. 7, the HGA needs to obtain dynamic data of each frame corresponding to the preset quantity of frames in the first drawing sequence, and process the dynamic data of each frame, to generate a first drawing command corresponding to each frame. The first drawing command includes first drawing information. The first drawing command indicates the GPU to execute a corresponding drawing task based on the first drawing information. Then, the HGA sends the first drawing command corresponding to each frame to the GPU, so that the GPU executes a drawing task for a foreground image in the watch-face interface based on the first drawing command.

The following provides descriptions in detail by using an example in which the HGA obtains the dynamic data corresponding to the first frame of watch-face interface and the dynamic data corresponding to the second frame of watch-face interface in the first drawing sequence.

In some embodiments of this application, the HGA obtains the dynamic data corresponding to the first frame of watch-face interface, and generates the first drawing command corresponding to the first frame of watch-face interface based on the dynamic data and a drawing parameter corresponding to a first frame of initial drawing command. The first drawing command indicates the GPU to execute the drawing task for the foreground image in the first frame of watch-face interface. It may also be understood that the first drawing command is a drawing command obtained after the initial drawing command is updated based on the dynamic data. The drawing parameter includes one or more of the foregoing drawing area size, drawing coordinates, drawing gradient color, and drawing blurring range.

In a process in which the HGA generates the first drawing command corresponding to the first frame of watch-face interface based on the dynamic data and the drawing parameter, the HGA may map the dynamic data into first drawing information, where the first drawing information indicates to-be-drawn content in the first frame of watch-face interface. Then, the HGA generates the first drawing command corresponding to the first frame of watch-face interface based on the first drawing information and the drawing parameter.

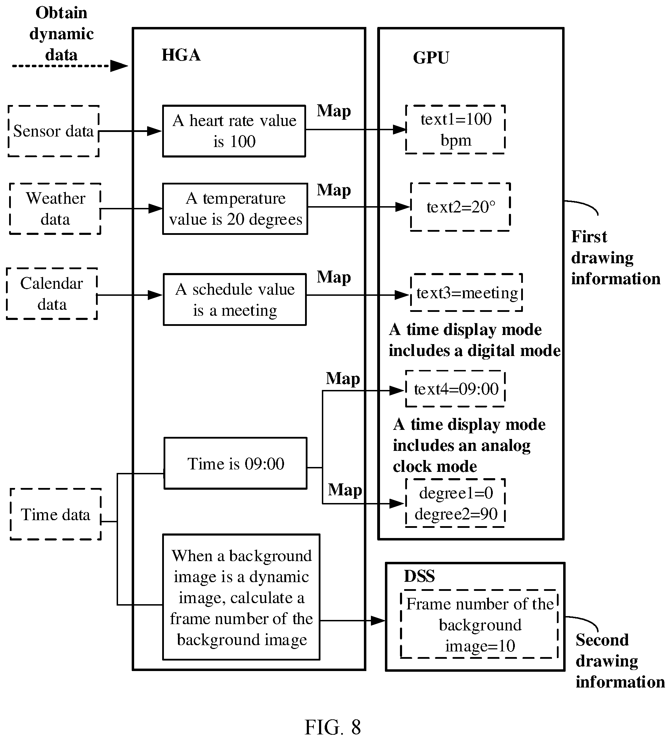

For example, with reference to FIG. 8, after obtaining the dynamic data of the first frame of watch-face interface, the HGA may map the dynamic data into the to-be-displayed first drawing information. For example, if the heart rate value corresponding to the heart rate is 100 in obtained sensor data, the heart rate value is mapped into "text1=100 bpm". For another example, if the temperature value corresponding to the temperature is 20° in the obtained weather data, the temperature value is mapped into "text2=20°". For another example, if the schedule value corresponding to the schedule is a meeting in the obtained calendar data, the schedule value is mapped into "text3=meeting".

In an implementation, when a time display mode in the watch-face interface includes a digital mode, if the time value corresponding to "hour" is 9 and the time value corresponding to "minute" is 0 in the obtained time data, the time value is mapped into "text4=09:00".

In another implementation, when a time display mode in the watch-face interface includes an analog clock mode, after obtaining the time data, the HGA may map the time data into a to-be-displayed rotation angle, so that the GPU subsequently draws a foreground image in the analog clock mode based on the rotation angle.

For example, if the time value corresponding to "hour" is 9 and the time value corresponding to "minute" is 0 in the obtained time data, the time value is mapped into a minute-hand rotation angle "degree1=0" and an hour-hand rotation angle "degree2=90". It should be noted that the foregoing mapping relationship between the dynamic data and the first drawing information may be prestored in a memory in the smartwatch. The HGA may obtain the mapping relationship from the memory, to complete processing of the dynamic data.

For example, the drawing parameter corresponding to the first frame of watch-face interface includes that the drawing gradient color is blue, and the first drawing information includes "text1=100 bpm", "text2=20°", "text3=meeting", and "text4=09:00". Further, the HGA may generate the first drawing instruction corresponding to the first frame of watch-face interface by using the first drawing information and the drawing parameter. It should be noted that in this embodiment of this application, that the first drawing sequence includes the drawing parameter corresponding to the initial drawing instruction is merely used as an example for description, and the first drawing sequence may alternatively not include the drawing parameter. This is not specifically limited in this embodiment of this application.

Based on step S603, the HGA may generate the first drawing command and the first drawing information corresponding to the first frame of watch-face interface. In some cases, the first drawing command may include one or more subcommands, for example, include a first subcommand and a second subcommand; and the first drawing information may include one or more pieces of drawing sub-information, for example, include first drawing sub-information and second drawing sub-information.

It should be noted that the first drawing command is an instruction for drawing (also referred to as "generating") a drawing target in an image frame, for example, a drawing call command implemented based on an open graphics library (Open Graphics Library, OpenGL) (that is, a call command of the GPU for an underlying graphics drawing interface (Application Programming Interface, API)). The "first drawing command" in this application may be one command, for example, one API call function, or may be a set of a plurality of commands. For example, in the OpenGL, a drawing call command implemented based on the OpenGL usually includes a plurality of API call functions. The drawing call command may be considered as one drawing command to complete drawing once. The drawing call command may alternatively be used to draw one drawing target, a plurality of drawing call commands may be used to draw one drawing target, or one drawing call command may be used to draw a plurality of drawing targets.

In an implementation, the HGA sends the first subcommand to the GPU, where the first subcommand includes the first drawing sub-information, so that the GPU executes the drawing task for the foreground image in the watch-face interface based on the first subcommand and the first drawing sub-information; and sends the second subcommand to the GPU, where the second subcommand includes the second drawing sub-information, so that the GPU executes a drawing task for the watch-face interface based on the second subcommand and the second drawing sub-information. For example, the first drawing sub-information includes "text1=100 bpm", "text2=20°", "text3=meeting", and "text4=09:00", and the second drawing sub-information includes "degree1=0" and "degree2=90", so that the GPU executes a drawing task for "text1-text4" in response to the first subcommand, and executes a drawing task for "degree1" and "degree2" in response to the second subcommand.

Step S604: The GPU draws the foreground image in the first frame of watch-face interface based on the first drawing command.

In some embodiments of this application, the GPU receives the first drawing command sent by the HGA, where the first drawing command includes the first drawing information. The first drawing command indicates the GPU to execute a corresponding drawing task based on the first drawing information. Further, the GPU may draw the foreground image in the first frame of watch-face interface based on the first drawing command.

In some embodiments, a watch-face interface usually includes a foreground image and a background image. Most of display content in the foreground image frequently and differently changes in real time, for example, time content, sports and health content, and weather content. Therefore, the GPU needs to draw the foreground image in the watch-face interface in real time based on the first drawing command corresponding to each frame. The background image usually does not change in real time, and therefore does not need to be drawn by the GPU in real time.

The foreground image includes a graphic element generated by using dynamic data and/or a graphic element generated by using static data. The graphic element of the dynamic data may include a number corresponding to time, a graph corresponding to an hour hand/minute hand/second hand, a number corresponding to sports data, a number corresponding to health data, text corresponding to weather, a graph corresponding to the weather, and the like. The graphic element of the static data may include a font color, a graphic texture, a graphic gradient, and the like. It may be understood that the dynamic data represents data that is associated with the user and that changes in real time, and the static data represents drawing data that is associated with the user and that is fixed.

The foregoing is still used as an example. The HGA sends the first subcommand and the second subcommand to the GPU, where the first subcommand includes the first drawing sub-information, and the second subcommand includes the second drawing sub-information. For example, the first drawing sub-information includes "text1=100 bpm", "text2=20°", "text3=meeting", and "text4=09:00", and the second drawing sub-information includes "degree1=0" and "degree2=90". In this case, the GPU may execute the drawing task for "text1-text4" in response to the first subcommand, and execute the drawing task for "degree1" and "degree2" in response to the second subcommand.

It may be learned that in this embodiment of this application, the HGA calculates the data required for drawing the watch-face interface, generates the series of commands corresponding to the data, and may send the first drawing command corresponding to the first frame of watch-face interface to the GPU, and the GPU completes a drawing operation for the foreground image in the first frame of watch-face interface based on the first drawing command. Then, the foregoing steps are continuously repeated to implement a frame cycling process, so as to complete drawing operations for foreground images in all of a preset quantity of frames of watch-face interfaces in a watch-face interface. This reduces a quantity of interactions between the CPU and GPU, and reduces load and power consumption of the CPU.

In some embodiments, the HGA generates a second drawing command corresponding to the first frame of watch-face interface based on the dynamic data of the watch-face interface corresponding to the initial drawing command. The HGA sends the second drawing command corresponding to the first frame of watch-face interface to the DSS. The second drawing command corresponding to the first frame of watch-face interface includes second drawing information corresponding to the first frame of watch-face interface. The second drawing command indicates the DSS to draw a background image in the first frame of watch-face interface based on the second drawing information corresponding to the first frame of watch-face interface. The DSS executes a drawing task for the background image in the first frame of watch-face interface based on the second drawing command corresponding to the first frame of watch-face interface.

In an implementation, when the background image in the watch-face interface is a dynamic image, the second drawing information corresponding to the first frame of watch-face interface may include a frame number corresponding to the background image. The HGA may generate the second drawing information that includes the frame number corresponding to the first frame of background image based on obtained time data of the first frame of watch-face interface. The DSS draws a frame of static image in the dynamic image based on a frame number corresponding to the first frame of watch-face interface.

In some embodiments, the GPU sends the drawn foreground image in the first frame of watch-face interface to the DSS based on the first drawing command. The DSS generates the first frame of watch-face interface based on the second drawing command and with reference to the background image in the first frame of watch-face interface and the background image in the first frame of watch-face interface. Then, the DSS sends the first frame of watch-face interface to a display screen, and the display screen displays the first frame of watch-face interface.

In other words, after executing the drawing task for the background image in the first frame of watch-face interface, the DSS executes a combination task for the foreground image in the first frame of watch-face interface and the first frame of watch-face interface drawn by the DSS, and a sending for display task for the generated first frame of watch-face interface.

Based on the foregoing process in which the HGA sends the first drawing command corresponding to the first frame of watch-face interface to the GPU, and the HGA sends the second drawing command corresponding to the first frame of watch-face interface to the DSS, only the first frame of watch-face interface in the N frames of watch-face interfaces is used as an example in this embodiment of this application. It may be understood that specifically, the HGA sends a first drawing command corresponding to each of the N frames of watch-face interfaces to the GPU, where the N frames include the first frame. In addition, the HGA sends a second drawing command corresponding to each of the N frames of watch-face interfaces to the DSS, where the N frames include the first frame.

Step S605: The HGA sends a second drawing command corresponding to the second frame of watch-face interface to the DSS based on the dynamic data, where the second frame is a previous frame of the first frame.

In some other embodiments of this application, the HGA generates the second drawing command corresponding to the second frame of watch-face interface based on the obtained dynamic data of the second frame of watch-face interface, where the second drawing command includes second drawing information corresponding to the second frame of watch-face interface. The second drawing command corresponding to the second frame of watch-face interface indicates the DSS to draw a background image in the second frame of watch-face interface based on the second drawing information.

Usually, a foreground image in a watch-face interface needs to be drawn by the GPU in real time. A background image in the watch-face interface may be a static background image, or may be a frame of static image in a dynamic image. It may be understood that the background image does not change in real time based on the dynamic data.

When the background image in the watch-face interface is a static image, as an image frame changes, display content corresponding to each frame is the static image. When the background image in the watch-face interface is a dynamic image, as an image frame changes, display content corresponding to each frame is a same or different static image.

In some embodiments of this application, when the background image in the watch-face interface is a dynamic image, the second drawing information corresponding to the second frame of watch-face interface may include a frame number corresponding to the background image. The HGA may generate the second drawing command based on time data, and send the second drawing command to the DSS, where the second drawing information corresponding to the second frame of watch-face interface includes the frame number corresponding to the background image, so that the DSS executes a drawing task for the background image based on the frame number of the background image.

The dynamic image is cyclically displayed in a specific period. For example, the dynamic image is cycled once per minute, and 60 frames are included per minute. In this way, each second corresponds to a corresponding frame number. For example, a frame number corresponding to 09:01:18 is 18, a frame number corresponding to 10:02:43 is 43, and a frame number corresponding to 12:12:56 is 56.

Therefore, the HGA may generate the frame number corresponding to the second frame of background image based on the obtained time data of the second frame of watch-face interface, so that the DSS subsequently directly draws a frame of static image in the dynamic image based on a frame number corresponding to the second frame of watch-face interface.

For example, still with reference to FIG. 8, when the background image in the watch-face interface is a dynamic image, the HGA generates the second drawing command corresponding to the second frame of watch-face interface based on the time data, where the second drawing information corresponding to the second frame of watch-face interface includes that the frame number of the background image is 10. Subsequently, the DSS draws the background image whose frame number is 10 based on the second drawing information corresponding to the second frame of watch-face interface.

Step S606: The DSS draws the background image in the second frame of watch-face interface based on the second drawing command.

In some embodiments of this application, the first drawing sequence may include the initial drawing command corresponding to the second frame of watch-face interface. In a process of executing the drawing task for the foreground image in the first frame of watch-face interface, the DSS executes the drawing task for the background image in the second frame of watch-face interface. The second frame of watch-face interface is a previous frame of watch-face interface that is arranged in a display sequence and that is of the first frame of watch-face interface.

In some embodiments of this application, the DSS receives the second drawing command that corresponds to the second frame of watch-face interface and that is sent by the HGA, where the second drawing command includes the second drawing information. The foregoing is still used as an example. For example, the second drawing information includes that the frame number corresponding to the background image is 10. The DSS may draw the background image corresponding to the second frame in response to the second drawing command corresponding to the second frame of watch-face interface, where the background image is a dynamic image corresponding to the frame number 10.

The DSS is further configured to combine, based on the second drawing command corresponding to the second frame of watch-face interface, a foreground image that is drawn by the GPU and that corresponds to the second frame and the background image that is drawn by the DSS and that corresponds to the second frame, to generate a complete watch-face interface corresponding to the second frame; and finally send the second frame of watch-face interface to the display screen, so that the display screen subsequently displays the watch-face interface. It may be understood that in a process in which the DSS draws the second frame of watch-face interface, the GPU draws the foreground image corresponding to the first frame of watch-face interface.

In some embodiments of this application, the DSS may draw the background image in the second frame of watch-face interface based on the second drawing command corresponding to the second frame of watch-face interface. The HGA may further send a combination command for the second frame of watch-face interface to the DSS, and the DSS combines the background image and the foreground image in the second frame of watch-face interface based on the combination command, to generate the complete second frame of watch-face interface. The HGA may further send a sending for display command for the second frame of watch-face interface to the DSS, and the DSS sends the complete second frame of watch-face interface to the display screen based on the sending for display command, so that the display screen displays the complete second frame of watch-face interface. It may also be understood that the second drawing command, the combination command, and the sending for display command corresponding to the second frame of watch-face interface are drawing commands obtained after the HGA updates the initial drawing command based on the dynamic data.

In conclusion, in this embodiment of this application, the HGA calculates the data required for drawing the watch-face interface, generates the series of commands corresponding to the data, and then sends the second drawing command corresponding to the second frame of watch-face interface to the DSS, so that the DSS completes a drawing operation for the background image in the second frame of watch-face interface. Then, the foregoing steps are continuously repeated to implement a frame cycling process, so as to complete drawing operations for background images corresponding to all of a preset quantity of frames in a watch-face interface. This reduces a quantity of interactions between the CPU and DSS, and reduces the power consumption of the CPU.

Steps S603 and S604 and steps S605 and S606 may be synchronously performed, or may be performed in a preset time sequence. An execution sequence is not specifically limited in this embodiment of this application.

For ease of understanding, a drawing process of the GPU and a drawing process of the DSS in this application are described in detail by still using the first frame of watch-face interface and the second frame of watch-face interface as examples. The second frame is a previous frame of the first frame.

It may be understood that after completing drawing of the foreground image in the second frame of watch-face interface, the GPU sends the foreground image in the second frame of watch-face interface to the DSS. After combining the foreground image and the background image in the second frame of watch-face interface, the DSS generates and displays the complete second frame of watch-face interface. Then, when displaying and combining the foreground image and the background image in the first frame of watch-face interface, the DSS further needs to wait for the GPU to complete drawing of the foreground image in the first frame of watch-face interface. Therefore, a long time is consumed in an entire drawing and display process, and working efficiency is low.

In this embodiment of this application, in a process in which the GPU draws the foreground image in the first frame of watch-face interface, the DSS combines the foreground image that is in the first frame of watch-face interface and that is drawn by the GPU and the background image that is in the first frame of watch-face interface and that is drawn by the DSS, and displays the complete first frame of watch-face interface. It may be understood that the foreground image in the first frame of watch-face interface is drawn when the DSS draws the background image in the second frame of watch-face interface.

Therefore, in this embodiment of this application, the HGA sends the first drawing command corresponding to the first frame of watch-face interface to the GPU, and sends the second drawing command corresponding to the second frame of watch-face interface to the DSS, where the second frame is a previous frame of the first frame. In a process of displaying a current frame of watch-face interface, a foreground image in a next frame of watch-face interface may be drawn in advance. Therefore, total duration of a drawing process is reduced, so that subsequent display is smoother.

In conclusion, the HGA may replace the CPU to complete obtaining and processing operations on real-time dynamic data, and may generate the first drawing command corresponding to each frame of watch-face interface with reference to the first drawing sequence and the dynamic data, where the first drawing command includes the first drawing information, so that the GPU subsequently executes a corresponding drawing task based on the first drawing command. The HGA may further generate the second drawing command corresponding to each frame of watch-face interface based on the dynamic data, so that the DSS subsequently executes a corresponding drawing task based on the second drawing command.

It may be learned that the HGA may take over a plurality of processing tasks of the CPU, for example, scheduling the GPU and the DSS: decomposing tasks executed by the GPU and the DSS, controlling start and stop of tasks executed by the GPU and the DSS, and synchronously controlling the GPU and the DSS to execute tasks. In addition, when the HGA acts as an agent of the CPU to perform task processing, the CPU may enter the sleep state. In this way, the power consumption of the CPU and power consumption of another working thread that cooperates with the CPU are reduced, to increase a longer battery life.

In some embodiments, in a computer architecture, both program instructions and data are stored in the memory. For a running speed and access efficiency, a cache storage apparatus such as a cache is usually used to store some drawing data for high-speed reading by the CPU. The drawing data may be, for example, recently accessed drawing data or drawing data pre-fetched in advance based on a program running rule. In this embodiment of this application, the drawing data may include a drawing parameter set corresponding to the background image and the foreground image in the watch-face interface, and the like.

In some embodiments of this application, the HGA sends a first addressing address corresponding to the first drawing command to the GPU in response to the initial drawing command. In a process in which the GPU executes the drawing task for the foreground image in the first frame of watch-face interface in response to the first drawing command corresponding to the first frame of watch-face interface, the GPU may access the memory based on the first addressing address, to obtain the first drawing command. Similarly, the HGA sends a second addressing address corresponding to the second drawing command to the DSS in response to the initial drawing command. In a process in which the DSS executes the drawing task for the background image in the first frame of watch-face interface based on the second drawing command corresponding to the first frame of watch-face interface, the DSS may access the memory based on the second addressing address, to obtain the second drawing command.

For example, the HGA may configure a drawing command addressing address and an addressing address corresponding to a drawing command parameter for the GPU, and configure addresses corresponding to the foreground image and the background image combined by the DSS. Each drawing command is associated with an addressing address, and the addressing address may represent and identify a storage location of the drawing command in the memory and a location of the drawing command in a program stream of an instruction set executed by the CPU. The addressing address may be used to provide identifiers for drawing commands for debugging and other operations. Other addressing addresses may further include a texture addressing address and the like, and may be the same as the drawing command addressing address. Details are not described herein again. In addition, an addressing manner is not specifically limited in this embodiment of this application.

In this way, after the HGA preconfigures the GPU and the DSS, in a drawing process, the GPU may find corresponding data based on the drawing command addressing address and the addressing address corresponding to the drawing command parameter to perform drawing. Similarly, the DSS may find corresponding data based on the addresses corresponding to the foreground image and the background image, and combine and display the data. A specific implementation process in which the HGA configures the GPU and the DSS is not limited in this embodiment of this application.

Step S607: The HGA detects whether the GPU completes execution of a drawing task corresponding to the first drawing sequence. If the GPU completes execution of the drawing task, step S609 is performed. Otherwise, step S608 is performed.

Step S608: Determine whether an electronic device detects an interrupt operation. If the electronic device detects the interrupt operation, step S609 is performed. Otherwise, step S607 is performed.

Step S609: The HGA receives a second drawing sequence sent by the CPU.

In some embodiments, after the GPU completes execution of the drawing task for the watch-face interface corresponding to the first drawing sequence, the HGA receives the second drawing sequence sent by the CPU.

In some embodiments of this application, the HGA calculates the data required for drawing the watch-face interface, generates the series of commands corresponding to the data, and then sends the first drawing command corresponding to the first frame of watch-face interface to the GPU, so that the GPU completes the drawing operation for the foreground image in the first frame of watch-face interface. In addition, the HGA sends the second drawing command corresponding to the second frame of watch-face interface to the DSS, so that the DSS completes the drawing operation for the background image in the second frame of watch-face interface, a combination operation for the foreground image and the background image in the second frame of watch-face interface, a display operation for the complete second frame of watch-face interface, and the like. Then, the GPU continuously and repeatedly performs a drawing operation for a foreground image in the current frame of watch-face interface, and the DSS continuously and repeatedly performs a drawing operation for a background image in a previous frame of the current frame, to complete a drawing task corresponding to the preset quantity of frames.

Therefore, after the GPU completes a drawing task for a last frame of watch-face interface in the preset quantity of frames, it may indicate that the GPU completes execution of the drawing task corresponding to the first drawing sequence. In this case, the GPU may send notification information to the HGA. The notification information represents that the GPU completes execution of the drawing task corresponding to the first drawing sequence. In this way, after detecting that the GPU completes execution of the drawing task corresponding to the first drawing sequence, the HGA receives the second drawing sequence sent by the CPU, so that the HGA starts to execute a new round of drawing task.

In an implementation, the HGA sends commands for a batch of drawing tasks (that is, a drawing sequence) to the GPU, and monitors an execution status of the GPU. After detecting that the GPU completes execution of the batch of drawing tasks, the HGA sends commands for a next batch of drawing tasks to the GPU, and monitors an execution status of the GPU. In a process in which the HGA monitors the execution status of the GPU, the HGA may frequently send an obtaining request for obtaining a drawing task execution status to the GPU in a specific period, and the GPU returns status information in response to the obtaining request sent by the HGA. The status information represents a current execution status of the GPU.

It may be learned that the CPU may prepare the drawing sequence in advance, and send the drawing sequence to the HGA. In response to the drawing sequence, the HGA replaces the CPU to execute a subsequent watch-face interface drawing task. Tests show that resources consumed by the HGA to execute the drawing task may be several times or even more than ten times less than those consumed by the CPU. Therefore, the HGA replaces the CPU to execute the watch-face interface drawing task, to reduce the power consumption of the CPU, power consumption of another working thread that cooperates with the CPU, and power consumption of a storage thread.

In addition, the HGA occupies fewer resources and consumes less power than the CPU when acting as an agent of the CPU to execute the watch-face interface drawing task. In addition, in a process of executing the drawing task, the HGA obtains and processes dynamic data corresponding to each frame, to update display content in the watch-face interface in real time. Therefore, in this embodiment of this application, the power consumption of the CPU and power consumption of the smartwatch are reduced without sacrificing a display effect, so that the smartwatch has a longer battery life, to improve user experience.

In some other embodiments of this application, after step S606, the method further includes: After the electronic device detects an interrupt operation, the HGA stops sending the first drawing command corresponding to each of the N frames of watch-face interfaces to the GPU, and stops sending the second drawing command corresponding to each of the N frames of watch-face interfaces to the DSS.

The HGA receives the second drawing sequence sent by the CPU, where the second drawing sequence includes initial drawing commands corresponding to M frames of watch-face interfaces, and M is an integer greater than 1; and the HGA sends a first drawing command corresponding to each of the M frames of watch-face interfaces to the GPU.

It may be understood that when the HGA detects that the GPU does not complete execution of the drawing task corresponding to the first drawing sequence, if the electronic device detects the interrupt operation, the HGA interrupts a drawing operation corresponding to the first drawing sequence, receives the second drawing sequence sent by the CPU, and executes a new round of watch face drawing task based on the second drawing sequence.

In some embodiments, the interrupt operation includes an interrupt operation triggered by the user and an interrupt operation triggered by the smartwatch.

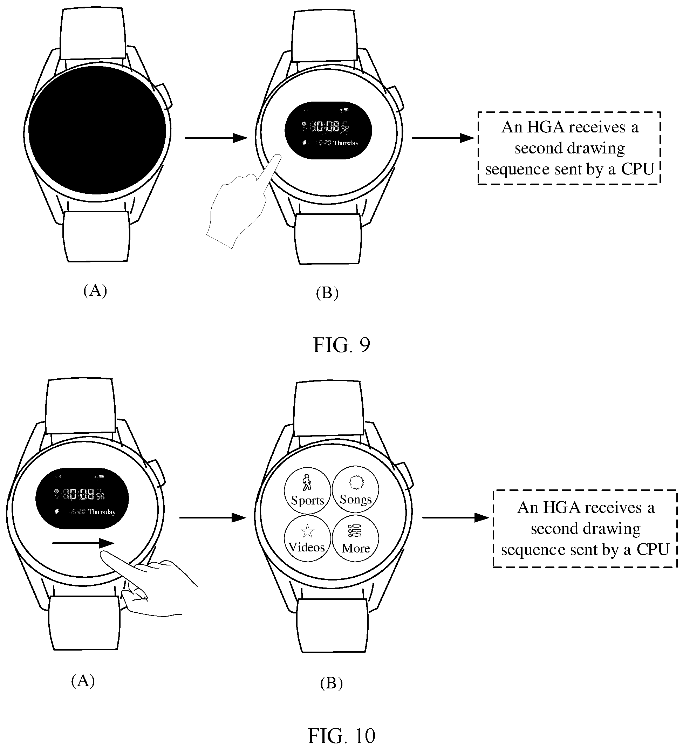

In some cases, the interrupt operation triggered by the user includes a touch operation performed by the user on the smartwatch. In an actual use scenario, with reference to (A) in FIG. 9, the smartwatch does not display a watch-face interface, and the user usually performs a touch operation when the user wants to interact with the smartwatch. After the smartwatch detects the touch operation, it may indicate that the user wants to view a watch-face interface. In this case, the smartwatch displays the watch-face interface. For example, with reference to (B) in FIG. 9, the user taps the display screen of the smartwatch, the user taps a crown of the smartwatch, or the user rotates a crown of the smartwatch. In another actual use scenario, with reference to (A) in FIG. 10, the smartwatch currently displays a watch-face interface, and when the user wants to interact with the smartwatch, the user may still perform a touch operation, to update the watch-face interface currently displayed by the smartwatch. With reference to (B) in FIG. 10, after detecting the touch operation, the smartwatch displays an updated watch-face interface in response to the touch operation. For example, the user taps a content control displayed on the display screen, or the user performs a sliding operation along an end face of the display screen.

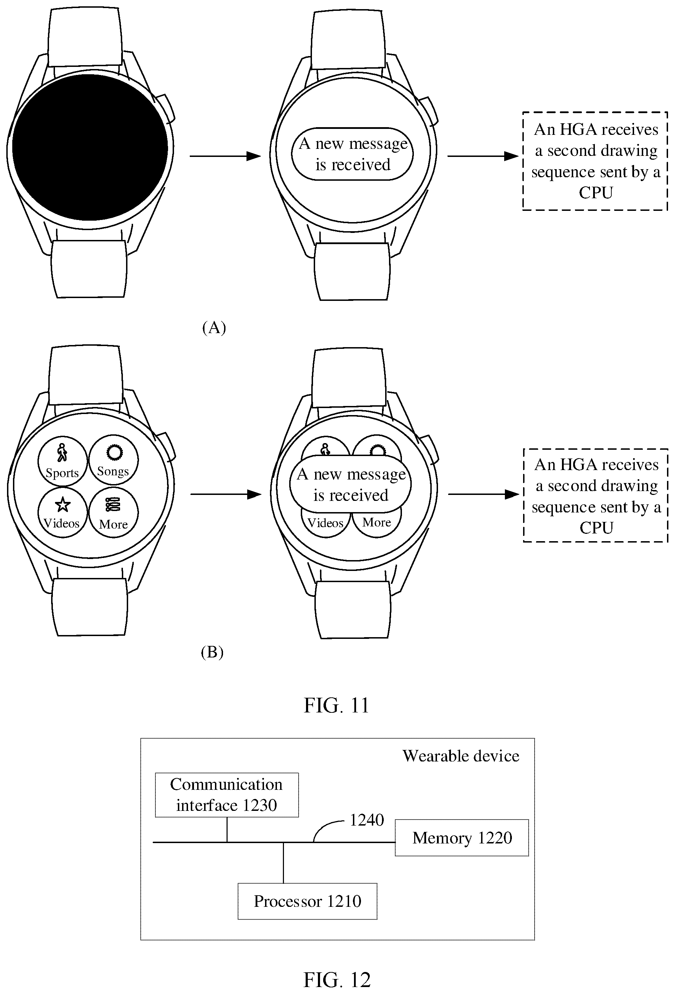

In some other cases, the interrupt operation triggered by the smartwatch includes a prompt operation output by the smartwatch. For example, with reference to (A) in FIG. 11, when the smartwatch currently does not display a watch-face interface, there is prompt information output by an application running in background in the smartwatch. With reference to (B) in FIG. 11, when the smartwatch currently displays a watch-face interface, there is prompt information output by an application running in foreground in the smartwatch.

In some embodiments, the HGA continuously and repeatedly sends the first drawing command corresponding to each frame of watch-face interface to the GPU, so that the GPU performs a corresponding drawing operation; and continuously and repeatedly sends the second drawing command corresponding to each frame of watch-face interface to the DSS, so that the DSS performs the drawing operation for the background image in the previous frame of watch-face interface relative to the current frame of the GPU. However, in a process in which the HGA continuously and repeatedly controls the GPU and the HGA to execute a watch face drawing task, the watch face drawing task is interrupted.

For ease of understanding, still with reference to (A) in FIG. 9, in a process in which the user does not interact with the smartwatch, the HGA continuously and repeatedly controls the GPU and the HGA to execute the watch face drawing task. With reference to (B) in FIG. 9, if the user enters a tap operation on the smartwatch, the smartwatch displays a watch-face interface in response to the tap operation. In this case, a process in which the HGA controls the GPU and the DSS to execute the watch face drawing task is interrupted, and the GPU and the DSS need to execute a new watch face drawing task after the user enters the tap operation on the smartwatch. Therefore, the HGA may receive the second drawing sequence sent by the CPU, to control the GPU and the DSS to execute a new round of watch face drawing task. For a specific implementation, refer to the foregoing embodiment. Details are not described herein again.

In some solutions, a plurality of embodiments of this application may be combined, and a combined solution is implemented. Optionally, some operations in the procedures of the method embodiments are optionally combined, and/or a sequence of some operations is optionally changed. In addition, an execution sequence of steps of each procedure is merely an example, and does not constitute a limitation on the execution sequence of the steps. The steps may alternatively be performed in another sequence. This is not intended to indicate that the execution sequence is the only sequence in which these operations can be performed. A person of ordinary skill in the art may figure out a plurality of manners to re-rank the operations described in embodiments of this application. In addition, it should be noted that process details in an embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

An embodiment of this application further provides a wearable device. For example, the wearable device may be the foregoing smartwatch. As shown in FIG. 12, the wearable device may include one or more processors 1210, a memory 1220, and a communication interface 1230.

The memory 1220 and the communication interface 1230 are coupled to the processor 1210. For example, the memory 1220 and the communication interface 1230 may be coupled to the processor 1210 through a bus 1240.

The communication interface 1230 is configured to perform data transmission with another device. The memory 1220 stores computer program code. The computer program code includes computer instructions, and when the computer instructions are executed by the processor 1210, the wearable device is enabled to perform the watch-face interface drawing method in embodiments of this application.

The processor 1210 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to this disclosure. Alternatively, the processor may be a combination implementing a computing function, for example, a combination including one or more microprocessors or a combination of a DSP and a microprocessor.

The bus 1240 may be a peripheral component interconnect (Peripheral Component Interconnect, PCI) bus, an extended industry standard architecture (Extended Industry Standard Architecture, EISA) bus, or the like. The bus 1240 may be classified into an address bus, a data bus, a control bus, and the like. For ease of representation, only one thick line is used for representation in FIG. 12, but this does not mean that there is only one bus or only one type of bus.

An embodiment of this application provides a chip system. The chip system includes a CPU, a GPU, an HGA, and a DSS, and is configured to support functions in the method embodiments, for example, generate or process information in the foregoing method. In a possible design, the chip system further includes a memory, configured to store program instructions and data that are necessary for the foregoing apparatus or device. The chip system may include a chip, or may include a chip and another discrete device.

An embodiment of this application further provides an electronic device. The electronic device includes a memory and one or more processors. The memory is coupled to the processor. The memory stores computer program code, and the computer program code includes computer instructions. When the computer instructions are executed by the processor, the electronic device is enabled to perform related method steps in the foregoing method embodiments.

An embodiment of this application further provides a computer-readable storage medium. The computer storage medium stores computer program code. When the foregoing processor executes the computer program code, an electronic device performs related method steps in the foregoing method embodiments.

An embodiment of this application further provides a computer program product. When the computer program product is run on a computer, the computer is enabled to perform related method steps in the foregoing method embodiments.

The wearable device, the chip system, the computer storage medium, or the computer program product provided in this application is configured to perform the corresponding method provided above. Therefore, for beneficial effects that can be achieved by the wearable device, the chip system, the computer storage medium, or the computer program product, refer to the beneficial effects of the corresponding method provided above. Details are not described herein again.

Based on the foregoing descriptions of the implementations, a person skilled in the art may clearly understand that for convenient and brief description, division into the foregoing functional modules is merely used as an example for description. In actual application, the foregoing functions may be allocated to and completed by different functional modules based on a requirement, that is, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and the components displayed as units may be one physical unit or a plurality of physical units, in other words, may be located in one place, or may be distributed in a plurality of places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A display interface drawing method, applied to an electronic device, wherein the electronic device comprises a central processing unit, a hardware graphics agent, and a graphics processing unit, and the method comprises:
sending, by the central processing unit, an initial drawing command to the hardware graphics agent, wherein the initial drawing command indicates to draw a display interface;
generating, by the hardware graphics agent, a first drawing command corresponding to a first frame of display interface based on dynamic data of the display interface corresponding to the initial drawing command in response to the initial drawing command; and
sending, by the hardware graphics agent, the first drawing command corresponding to the first frame of display interface to the graphics processing unit, wherein the first drawing command indicates the graphics processing unit to execute a drawing task for the first frame of display interface.

2. The method according to claim 1, wherein the graphics processing unit executes the drawing task of drawing the first frame of display interface, and the method further comprises:
executing, by the graphics processing unit, a drawing task for a foreground image in the first frame of display interface in response to the first drawing command corresponding to the first frame of display interface.

3. The method according to claim 1 or 2, wherein the electronic device further comprises a display subsystem DSS, and the method further comprises:
generating, by the hardware graphics agent, a second drawing command corresponding to the first frame of display interface based on the dynamic data of the display interface corresponding to the initial drawing command;
sending, by the hardware graphics agent, the second drawing command corresponding to the first frame of display interface to the DSS; and
executing, by the DSS, a drawing task for a background image in the first frame of display interface based on the second drawing command corresponding to the first frame of display interface.

4. The method according to claim 3, wherein generating, by the hardware graphics agent, the first drawing command corresponding to the first frame of display interface based on the dynamic data of the display interface corresponding to the initial drawing command comprises:
generating, by the hardware graphics agent, the first drawing command corresponding to the first frame of display interface based on the dynamic data and a drawing parameter corresponding to the initial drawing command, wherein
the drawing parameter comprises one or more of a drawing area size, drawing coordinates, a drawing gradient color, and a drawing blurring range.

5. The method according to claim 4, wherein generating, by the hardware graphics agent, the first drawing command corresponding to the first frame of display interface based on the dynamic data and the drawing parameter comprises:
mapping, by the hardware graphics agent, the dynamic data into first drawing information, wherein the first drawing information indicates to-be-drawn content in the first frame of display interface; and
generating, by the hardware graphics agent, the first drawing command corresponding to the first frame of display interface based on the first drawing information and the drawing parameter.

6. The method according to claim 5, wherein the electronic device further comprises a display screen, and the method further comprises:
sending, by the graphics processing unit, the drawn foreground image in the first frame of display interface to the DSS based on the first drawing command;
generating, by the DSS, the first frame of display interface based on the second drawing command and with reference to the background image in the first frame of display interface and the background image in the first frame of display interface;
sending, by the DSS, the first frame of display interface to the display screen; and
displaying, by the display screen, the first frame of display interface.

7. The method according to claim 6, wherein the electronic device further comprises a memory; and sending, by the hardware graphics agent, the first drawing command corresponding to the first frame of display interface to the graphics processing unit comprises:
sending, by the hardware graphics agent, a first addressing address corresponding to the first drawing command to the graphics processing unit in response to the initial drawing command;
executing, by the graphics processing unit, the drawing task for the foreground image in the first frame of display interface in response to the first drawing command corresponding to the first frame of display interface comprises:
accessing, by the graphics processing unit, the memory based on the first addressing address, to obtain the first drawing command;
sending, by the hardware graphics agent, the second drawing command corresponding to the first frame of display interface to the DSS comprises:
sending, by the hardware graphics agent, a second addressing address corresponding to the second drawing command to the DSS in response to the initial drawing command; and
executing, by the DSS, the drawing task for the background image in the first frame of display interface based on the second drawing command corresponding to the first frame of display interface comprises:
accessing, by the DSS, the memory based on the second addressing address, to obtain the second drawing command.

8. The method according to any one of claims 3 to 7, wherein sending, by the central processing unit, the initial drawing command to the hardware graphics agent comprises:
sending, by the central processing unit, a first drawing sequence to the hardware graphics agent, wherein the first drawing sequence comprises the initial drawing command corresponding to N frames of display interfaces, N is an integer greater than 1, and the N frames of display interfaces comprise the first frame of display interface;
sending, by the hardware graphics agent, the first drawing command corresponding to the first frame of display interface to the graphics processing unit comprises:
sending, by the hardware graphics agent, a first drawing command corresponding to each of the N frames of display interfaces to the graphics processing unit, wherein the N frames comprise the first frame; and
sending, by the hardware graphics agent, the second drawing command corresponding to the first frame of display interface to the DSS comprises:
sending, by the hardware graphics agent, a second drawing command corresponding to each of the N frames of display interfaces to the DSS, wherein the N frames comprise the first frame.

9. The method according to claim 8, wherein the first drawing sequence comprises the initial drawing command corresponding to a second frame of display interface, and the method further comprises:
executing, by the DSS, a drawing task for a background image in the second frame of display interface in a process of executing the drawing task for the foreground image in the first frame of display interface, wherein the second frame of display interface is a previous frame of display interface that is arranged in a display sequence and that is of the first frame of display interface.

10. The method according to claim 9, wherein the method further comprises:
receiving, by the hardware graphics agent after completing a drawing task for a display interface corresponding to the first drawing sequence, a second drawing sequence sent by the central processing unit.

11. The method according to any one of claims 8 to 10, wherein the method further comprises:
after the electronic device detects an interrupt operation, stopping sending, by the hardware graphics agent, the first drawing command corresponding to each of the N frames of display interfaces to the graphics processing unit, and stopping sending the second drawing command corresponding to each of the N frames of display interfaces to the DSS;
receiving, by the hardware graphics agent, the second drawing sequence sent by the central processing unit, wherein the second drawing sequence comprises initial drawing commands corresponding to M frames of display interfaces, and M is an integer greater than 1; and
sending, by the hardware graphics agent, a first drawing command corresponding to each of the M frames of display interfaces to the graphics processing unit.

12. The method according to any one of claims 8 to 11, wherein the method further comprises:
entering, by the central processing unit, a sleep state after sending the first drawing sequence to the hardware graphics agent.

13. The method according to claim 1, wherein the display interface is a display interface of a watch face of a smartwatch.

14. An electronic device, wherein the electronic device comprises a memory and one or more processors, the memory is coupled to the processor, the memory stores computer program code, the computer program code comprises computer instructions, and when the computer instructions are executed by the processor, the electronic device is enabled to perform the display interface drawing method according to any one of claims 1 to 13.

15. A computer-readable storage medium, wherein the computer-readable storage medium stores instructions, and when the instructions are run on a computer, the computer is enabled to perform the display interface drawing method according to any one of claims 1 to 13.
